# EUROPÄISCHE PATENTSCHRIFT

(11) **EP 2 408 581 B1**
(45) Veröffentlichungstag und Bekanntmachung des Hinweises auf die Patenterteilung: **10.05.2017**
(21) Anmeldenummer: 10711042.1
(22) Anmeldetag: 17.03.2010
(51) Int. Cl.: B23B 51/02

(54) **MODULARER BOHRER**
MODULAR DRILL
FORET MODULAIRE

(30) Priorität: 19.03.2009 DE 102009013580
(43) Veröffentlichungstag der Anmeldung: 25.01.2012
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: GLIMPEL, Helmut, 91207 Lauf a. d. Pegnitz (DE); BORSCHERT, Bernhard, 96050 Bamberg (DE)
(74) Vertreter: Schröer, Gernot H.
(86) Internationale Anmeldenummer: PCT/EP2010/053485
(87) Internationale Veröffentlichungsnummer: WO 2010/106117

(56) Entgegenhaltungen:
- EP-A1- 1 990 113
- DE-A1- 10 311 508
- DE-A1-102006 005 880
- JP-A- 2003 326 411
- JP-A- 2005 161 462
- US-A- 5 947 660
- US-A- 6 012 881
- US-A1- 2005 135 887
- US-A1- 2007 274 795
- US-A1- 2008 193 237

## Beschreibung

Die Erfindung betrifft einen modularen Bohrer, umfassend ein Schaftteil mit einer Stirnseite sowie ein Schneidteil, das mit dem Schaftteil an dessen Stirnseite verbunden oder verbindbar ist.

Bohrer, insbesondere aus Vollhartmetall, wurden bisher in der Regel einstückig ausgeführt. Wegen der stark gestiegenen Rohstoffpreise, insbesondere für Hartmetall, gehen aber Hersteller dazu über, modulare Werkzeuge herzustellen und zu vertreiben.

Modulare Bohrer umfassen einerseits ein Schaftteil, andererseits ein Schneidteil, wobei das Schaftteil und das Schneidteil an einer Trennstelle miteinander verbunden sind oder verbunden werden können. Bei modularen Bohrern muss das auf das Schaftteil zur Ermöglichung des Bohrvorgangs ausgeübte Drehmoment auf das Schneidteil übertragen werden.

Bei modularen Bohrern ist meist oder zumindest häufig nur das Schneidteil aus Vollhartmetall ausgebildet, das Schaftteil dagegen aus gehärteten Stahl.

Modulare Bohrer sind bekannt aus JP 2005 16 14 62, DE 696 29 943 T2, WO 03/070408, DE 44 35 857 A1 sowie DE 698 25 586 T2.

Die Offenlegungsschrift US 2007/274795 A1 beschreibt eine auswechselbare Bohrerspitze in Kombination mit einem Schaft. Die Bohrerspitze hat eine Bohreroberfläche, die sich von einem Scheitelpunkt zu oberen Kanten der gebogenen Seiten und oberen Kanten der Nuten erstreckt. Die bogenförmigen Seiten und Nuten kreuzen sich an einer Kante, die sich von der Bohreroberfläche zu einer unteren Oberfläche der Bohrerspitze erstreckt. Ein Stift erstreckt sich vom Ende des Schafts durch Verzahnungen und ausgerichtet mit der Längsachse des Schaftes. Der Stift erstreckt sich in einen Kanal, der im Boden der Bohrerspitze gebildet ist. Die Bohrerspitze ist axial am Schaft durch Schließelemente gesichert, die durch Durchbohrungen in der Bohrerspitze gebildet werden und die mit Zapfen am Ende des Schaftes mit der Bohrerspitze in der installierten Position auf dem Schaft ausgerichtet sind. Aufgabe der Erfindung ist es einerseits, eine neue Trennstelle für einen modularen Bohrer zu schaffen. Aufgabe der Erfindung ist es zudem, einen modularen Bohrer bereitzustellen, der eine möglichst gute Möglichkeit zur Übertragung des Drehmoments aufweist und zudem möglichst kostengünstig betreibbar ist.
Die Aufgaben werden durch einen modularen Bohrer gemäß Anspruch 1 der Erfindung gelöst, wobei sich insbesondere aus den Unteransprüchen vorteilhafte Ausführungsformen und Weiterbildungen ergeben. Die Erfindung betrifft einen modularen Bohrer gemäß Anspruch 1.

Mit Hilfe des erfindungsgemäßen modularen Bohrers wird somit eine Trennstelle zwischen Schaftteil und Schneidteil geschaffen, mit der sich Drehmomente in vorteilhafter Weise vom Schaftteil auf das Schneidteil übertragen lassen. Zudem erlaubt der erfindungsgemäße modulare Bohrer eine radiale Zentrierung und Verspannung des Schneidteils in Bezug auf das Schaftteil. Der erfindungsgemäße modulare Bohrer ermöglicht eine Materialersparnis, da abnutzungsbedingt üblicherweise nicht mehr der gesamte Bohrer, sondern lediglich das Schneidteil ausgetauscht werden muss. Bei Austausch lediglich des Schneidteils entfällt auch das bei nichtmodularen Bohrern gängige Nachschleifen des Bohrers, was üblicherweise beim Bohrerhersteller erfolgt und zusätzliche Kosten auch für den Versand verursacht, so dass durch den erfindungsgemäßen modularen Bohrer auch die Logistikkosten für die Bereitstellung des Bohrers weiter verringert werden.
Das Schaftteil weist an seiner Stirnseite eine zumindest im wesentlichen senkrecht zur Drehachse verlaufende Trennfläche auf und das Schneidteil weist an seiner von der Stirnseite abgewandten Fußseite eine zumindest im wesentlichen senkrecht zur Drehachse verlaufende Trennfläche auf, wobei besonders bevorzugt die Trennfläche des Schaftteils und die Trennfläche des Schneidteils flächig, insbesondere sich berührend, aneinander angrenzen oder aneinander angrenzen können. Dies erhöht die Stabilität der Verbindung von Schneidteil und Schaftteil in zusätzlicher Weise.

Bevorzugt weist das Schaftteil genau oder wenigstens zwei Bohrkörper parallel zur Drehachse oder spiralförmig mit einen Drallwinkel um die Drehachse verlaufend auf, die durch Spannuten voneinander getrennt sind.

Das oder je ein Drehmoment-Übertragungselement ist am stirnseitigen Ende eines oder jedes Bohrkörpers ausgebildet oder bildet das stirnseitige Ende aus. Über das stirnseitige Ende können Drehmomente in besonders vorteilhafter Weise übertragen werden.

Bevorzugt weist das Schneidteil wenigstens zwei Bohrkörper parallel zur Drehachse oder spiralförmig mit einen Drallwinkel um die Drehachse verlaufend auf, die durch Spannuten voneinander getrennt sind, wobei der oder jeder Bohrkörper an seiner in Drehrichtung angeordneten stirnseitigen Kante eine Schneidkante ausbildet, wobei am äußeren Ende der oder jeder Schneidkante eine Schneidecke ausgebildet ist.

Der oder jeder Bohrkörper weist an seinem stirnseitigen Ende eine Bohrkörper-Stirnfläche auf, an die in Gegendrehrichtung eine Bohrkörper-Zwischenfläche angrenzt, die einen Übergang zur oder zu einer Spannut ausbildet. Hierdurch kann einerseits die Stabilität der Kante erhöht werden und andererseits die Abführung der anfallenden Späne verbessert werden.

Das oder je ein Drehmoment-Aufnahmeelement oder -bereich erstreckt sich von der Trennfläche zur Bohrkörper-Zwischenfläche und zur Bohrkörper-Stirnfläche und grenzt an die Bohrkörper-Zwischenfläche und die Bohrkörper-Stirnfläche an. Auf diese Weise kann das Drehmoment-Aufnahmeelement sowie gegebenenfalls das Drehmoment-Übertragungselement besonders groß ausgebildet werden, wodurch das Drehmoment in besonders wirksamer Weise übertragen werden kann.

Der Drehmoment-Aufnahme-Bereich verläuft in Richtung zur Bohrkörper-Stirnfläche und zur Bohrkörper-Zwischenfläche parallel zur Drehachse oder weist eine Neigung entgegen der Drehrichtung auf. Dies ermöglicht eine besonders einfache Montage des Schneidteils am Schaftteil, da das Schneidteils am Schaftteil angebracht werden kann, ohne dass bei der Annäherung eine Rotation des Schneidteils in Bezug auf das Schaftteil erforderlich ist.

Bevorzugt weist das Drehmoment-Übertragungselement wenigstens eine Zentrierfläche zur radialen Zentrierung des Schneidteils in Bezug auf das Schaftteil auf, wobei der wenigstens eine Drehmoment-Aufnahmebereich eine mit der Zentrierfläche korrespondierende Zentrier-Gegenfläche aufweist, wobei die wenigstens eine Zentrierfläche zusammen mit der Zentrier-Gegenfläche ein Zentrierelement ausbildet. Eine Zentrierfläche am Drehmoment-Übertragungselement ermöglicht eine besonders effiziente Fertigung von Schneid- und Schaftteil, da das Drehmoment-Übertragungselement in diesem Fall gleichzeitig als Zentrierelement wirken kann.

In einer bevorzugten Ausführungsform ist am Schneidteil entlang der Drehachse ein Bolzen angeordnet, wobei am Schaftteil entlang der Drehachse eine zentrale Bohrung angeordnet ist.

Vorzugsweise greift der Bolzen in die zentrale Bohrung ein oder kann in diese eingreifen und/oder bildet ein Zentrierelement zur radialen Zentrierung und/oder Stabilisierung des Schneidteils in Bezug auf das Schaftteil aus. Ein Bolzen entlang der Drehachse als Zentrierelement ermöglicht eine einfache Fertigung, da sich dieser bei Rotation des Schneidteils um seine Drehachse in einfacher Weise zentriert fertigen lässt.

Der Bohrer weist am Schneidteil einen Bohrerdurchmesser auf, wobei das Verspann-Element im Schneidteil Bohrungen oder Schraubenbohrungen (oder: Durchgangsbohrungen) für Befestigungsschrauben aufweist, wobei das Schaftteil Gewindebohrungen (oder: Bohrungen, die ein Gewinde aufweisen), vorzugsweise als Fortsetzung der Bohrungen im Schneidteil, für Befestigungsschrauben aufweist, wobei bevorzugt die Befestigungsschrauben einen Durchmesser zwischen 10% und 30%, mehr bevorzugt von etwa 15%, des Bohrerdurchmessers aufweisen können. Befestigungsschrauben am Schneidteil lassen sich in einfacher Weise zum Verspannen verwenden, zudem lässt sich die Verspann-Kraft durch Festlegung des beim Anzug der Befestigungsschrauben zu verwendenden Drehmoments in einfacher Weise dosieren.

In einer bevorzugten Ausführungsform weist das Schneidteil einen Bohrerdurchmesser auf, wobei das Schneidteil zwei Bohrkörper aufweist, wobei eine erste Ebene
a) 40% bis 70%, bevorzugt etwa 60%, des halben Bohrerdurchmessers von der Drehachse entfernt ist,
b) zur Drehachse parallel ist und
c) zu einer zweiten Ebene durch die schaftseitigen Schneidecken der beiden Bohrkörper, in der vorzugsweise die Drehachse verläuft, um 50° bis 85°, vorzugsweise 68° verdreht ist,
d) wobei sich die Mittelachse für die Schraubenbohrungen für die Befestigungsschrauben auf der ersten Ebene, insbesondere in Bezug auf eine zur Drehachse parallele Linie in einem Winkel, vorzugsweise von etwa 30% bis 80%, besonders bevorzugt von etwa 40% bis 60%, des Drallwinkels, erstreckt.

Diese Anordnung der Mittelachsen ist zum einen einfach auf einen vorgegebenen Drallwinkel einstellbar, zum anderen ermöglichen die beiden Schraubenverbindungen durch ihren relativen Winkel zueinander eine besonders stabile Verbindung.

Bevorzugt weist der Bohrer einen Bohrerdurchmesser auf, wobei das Schneidteil zwei Bohrkörper aufweist, wobei die Mittelachse für eine oder jede Schraubenbohrung für die Befestigungsschrauben jeweils auf einer ersten Ebene sowie auf einer dritten Ebene verläuft, wobei die erste Ebene
a) in einem Winkel von 50° bis 85°, bevorzugt etwa 68°, zu einer zweiten Ebene durch die schaftseitigen Schneidecken sowie zumindest im Wesentlichen durch die Drehachse verläuft und
b) zumindest im Wesentlichen parallel zur Drehachse verläuft, wobei der Abstand der ersten Ebene zur Drehachse 40% bis 70%, bevorzugt ungefähr 60%, des halben Bohrerdurchmessers beträgt und
wobei die dritte Ebene in einem Winkel von etwa 90° zur ersten Ebene steht und/oder um etwa 40% bis 60% des Drallwinkels geneigt ist.

Vorzugsweise weist das Verspann-Element am Schneidteil entlang der Drehachse eine Gewindebohrung für eine Befestigungsschraube auf, wobei das Schaftteil entlang der Drehachse eine Durchgangsbohrung für die Befestigungsschraube aufweist. Bei dieser Ausführungsform kann eine wirksame, gut dosierbare Verspannung von Schneidteil und Schaftteil bereits mit einer einzigen Schraube erzielt werden, die zudem eine unmittelbare axiale Kraft auf das Schneidteil ausübt und die darüber hinaus die Stirnfläche der Schneidteils nicht beeinträchtigen muss.

Vorzugsweise umfasst das Verspann-Element eine Befestigungsschraube, die seitlich unter einem Winkel in das Schaftteil eingedreht oder eindrehbar ist, wobei die Befestigungsschraube seitlich unter einem Winkel in den Bolzen eingreift oder eingreifen kann, wobei der Bolzen eine Ausnehmung für den Eingriff aufweist. Diese Verbindung von Schneidteil und Schaftteil, die auch als whistle-notch bezeichnet werden kann, ist ebenfalls gut dosierbar, muss die Stirnfläche des Bohrers nicht beeinträchtigen und ist zudem auch bei eingespanntem Bohrer einstellbar und/oder fixierbar.

Vorzugsweise verläuft innerhalb wenigstens eines oder jedes Bohrkörpers wenigstens eine oder je eine Kühlkanalbohrung, wobei die wenigstens eine Kühlkanalbohrung vorzugsweise, aber nicht notwendigerweise korrespondierend zum Verlauf des Bohrkörpers in Bezug auf die Drehachse verlaufen kann und insbesondere parallel zur oder spiralförmig um die Drehachse verlaufen kann und/oder wobei die wenigstens eine Kühlkanalbohrung in wenigstens einer Spannut des Schaftteils austritt. Dies ermöglicht die Zufuhr von Kühlmittel ohne Beeinträchtigung des Schneidteils und/oder ohne die Erfordernis von Bohrungen für die Zufuhr von Kühlmittel am Schneidteil.

In einer bevorzugten Ausführungsform sind die Drehmoment-Übertragungsfläche und/oder die Drehmoment-Aufnahmefläche gerade, konvex oder konkav ausgebildet und/oder die Drehmoment-Übertragungsfläche und/oder die Drehmoment-Aufnahmefläche verlaufen in einem positiven oder negativen Winkel zwischen 5° und 35°, bevorzugt zwischen 15° und 30°, besonders bevorzugt von zumindest in etwa 20°, zur Drehachse.

Bevorzugt weist der Bohrer einen Bohrerdurchmesser auf, wobei die Drehmoment-Aufnahmefläche winklig zur Trennfläche verläuft und/oder wobei ein erster Übergangsbereich zwischen einer ersten Drehmoment-Aufnahmefläche und der Trennfläche und ein zweiter Übergangsbereich zwischen einer zweiten Drehmoment-Aufnahmefläche und der Trennfläche verläuft, wobei die Längskanten des ersten Übergangsbereichs zumindest annähernd parallel zu den Längskanten des zweiten Übergangsbereichs verlaufen und/oder wobei die Längskanten des ersten Übergangsbereichs von den Längskanten des zweiten Übergangsbereichs, senkrecht zur Verlaufsrichtung der Längskanten gemessen, einen Abstand von etwa 40 bis 60%, bevorzugt von etwa 50%, des halben Bohrerdurchmessers aufweisen.

Vorzugsweise sind die Zentrierfläche und/oder die Zentrier-Gegenfläche eben oder gekrümmt ausgebildet, insbesondere als Teil einer Zylindermantelfläche mit der Drehachse als Mittelachse. Eine Zentrierfläche, die als Teil einer Zylindermantelfläche mit der Drehachse als Mittelachse ausgebildet ist, lässt sich ebenfalls in besonders effektiver Weise fertigen, womit der Bohrer auch zumindest vergleichsweise kostengünstig betreibbar ist.

Das oder jedes Drehmoment-Übertragungs-Element umfasst an seinem stirnseitigen Ende eine Stirnfläche, wobei an die Stirnfläche im Gegen-Uhrzeigersinn angrenzen
a) wenigstens eine Außenfläche, die andernends in eine Außenfläche des Bohrkörpers übergeht,
b) die Drehmoment-Übertragungsfläche, die andernends an die Trennfläche angrenzt,
c) die oder eine Zentrierfläche, die andernends an die Trennfläche angrenzt sowie
d) eine Drehmoment-Übertragungs-Gegenfläche, die andernends in eine Spannut übergeht.

Vorzugsweise grenzt die Drehmoment-Aufnahmefläche an die Zentrier-Gegenfläche unter einem Winkel an, wobei der Winkel etwa 90° beträgt, wobei besonders bevorzugt oder alternativ die Drehmoment-Übertragungsfläche an die Zentrierfläche unter einem Winkel angrenzt, wobei der Winkel etwa 90° beträgt. Diese Varianten ermöglichen eine besonders gute Zentrierung des Schneidteils in Bezug auf das Schaftteil bei gleichzeitig guter Drehmoment-Übertragung.

Die Erfindung wird im Folgenden anhand von Ausführungsbeispielen und unter Bezugnahme auf die beiliegenden Zeichnungen weiter erläutert. Darin zeigen die
- FIG 1: ein Ausführungsbeispiel für einen erfindungsgemäßen modularen Bohrer, die
- FIG 2: ein Ausführungsbeispiel für einen nicht erfindungsgemäßen modularen Bohrer, die
- FIG 3, 9 und 10: Ausführungsbeispiele für erfindungsgemäße Schaftteile, die
- FIG 4, 5, 7, 8 und 11: Ausführungsbeispiele für erfindungsgemäße Schneidteile und die
- FIG 6: ein Ausführungsbeispiel für ein nicht erfindungsgemäßes Schneidteil.

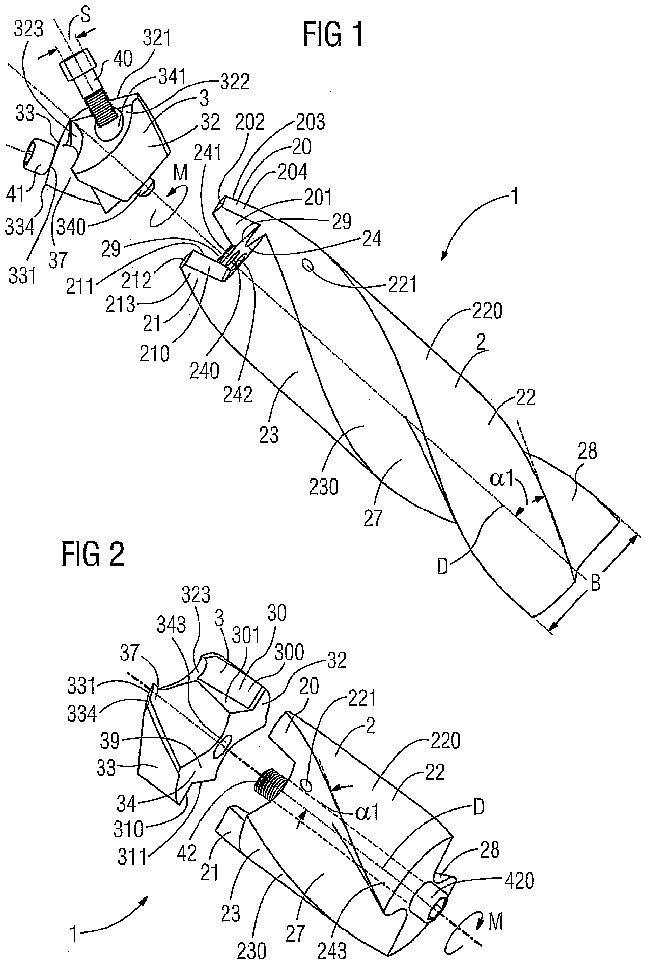

Die modularen Bohrer 1 gemäß den FIG 1 und 2 umfassen jeweils ein Schaftteil 2 sowie ein mit dem Schaftteil verbindbares Schneidteil 3 (oder: Bohrkopf), die jeweils um die Drehachse D in einer Drehrichtung drehbar sind. Die von der Stirnseite abgewandte Fußseite 39 des Schneidteils 3 ist mit dem Schaftteil 2 an dessen Stirnseite 29 verbindbar.

Zur maschinenseitigen Aufnahme weist das Schaftteil 2 einen Schaft auf, der in an sich bekannter Weise ausgebildet sein kann, beispielsweise in zylindrischer Form, und in den Figuren nicht dargestellt ist.

Das Schaftteil 2 weist zwei Bohrkörper 22 und 23 auf, die spiralförmig mit einem Drallwinkel α1 um die Drehachse D verlaufen. Alternativ könnten die Bohrkörper auch in axialer Richtung, parallel zur Drehachse D, verlaufen. Ebenso ist eine größere Anzahl von Bohrkörpern möglich.

Die Bohrkörper 22 und 23 des Schaftteils 2 sind jeweils durch Spannuten 27 und 28 voneinander getrennt.

Das Schneidteil 3 weist entsprechend zwei Bohrkörper 32 und 33 auf, die spiralförmig, ebenfalls mit einem Drallwinkel α1, um die Drehachse D verlaufen. Alternativ könnten, insbesondere wenn dies beim Schaftteil 2 der Fall ist, die Bohrkörper 32 und 33 auch in axialer Richtung, parallel zur Drehachse D, verlaufen. Ebenso ist entsprechend eine größere Anzahl von Bohrkörpern möglich.

Auch die Bohrkörper 32 und 33 des Schneidteils 3 sind jeweils durch Spannuten 37 und 38 voneinander getrennt. An seinem dem Schaftteil 2 zugewandten Ende weist das Schneidteil 3 eine Trennfläche 34 auf.

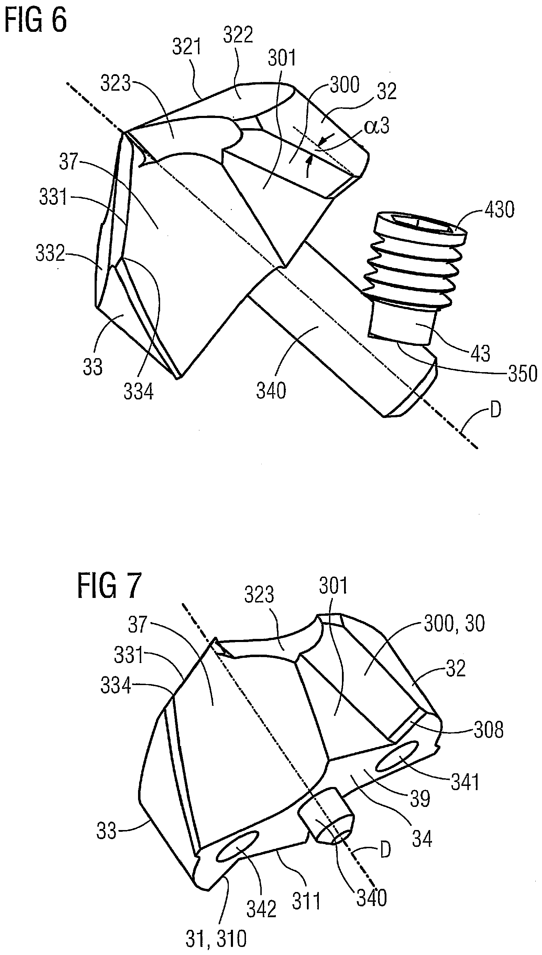

Der Bohrkörper 32 weist, was beispielsweise aus FIG 6 ersichtlich ist, an seinem stirnseitigen Ende eine Bohrkörper-Stirnfläche 322 auf, an die in Gegendrehrichtung eine Bohrkörper-Zwischenfläche 323 angrenzt, die einen Übergang zur Spannut 37 ausbildet.

Der Bohrkörper 33 weist an seinem stirnseitigen Ende, was nur in FIG 6 teilweise erkennbar ist, eine Bohrkörper-Stirnfläche 332 auf, an die in Gegendrehrichtung eine Bohrkörper-Zwischenfläche 333 angrenzt, die einen Übergang zur Spannut 38 ausbildet.

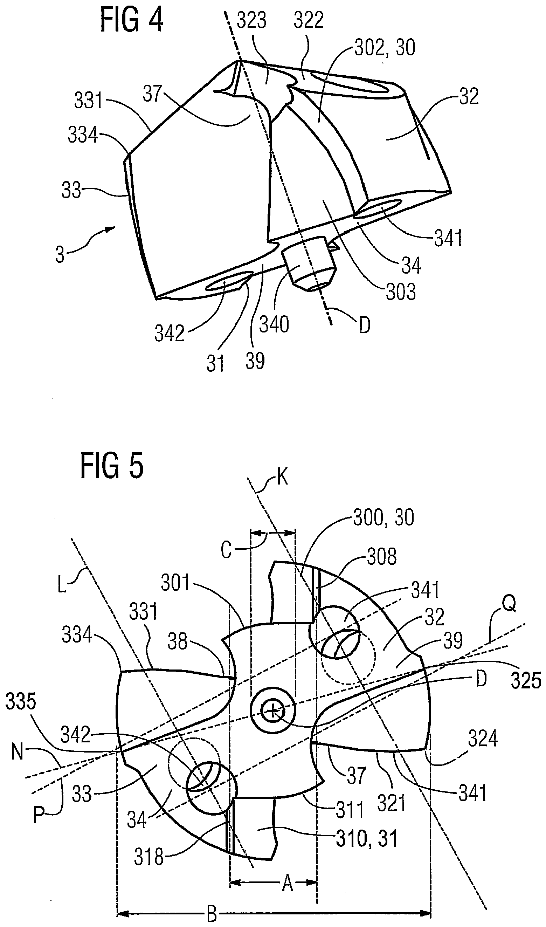

Der Bohrkörper 32 des Schneidteils 3 bildet, was insbesondere aus FIG 5 ersichtlich ist, an seiner in Drehrichtung angeordneten stirnseitigen Kante eine Schneidkante 321 aus, wobei am äußeren Ende der Schneidkante eine stirnseitige Schneidecke 324 ausgebildet ist. In Richtung zum Schaftteil 2 setzt sich die Schneidkante fort bis zur Trennfläche 34, an der die Schneidkante eine schaftseitige Schneidecke 325 ausbildet.

Entsprechend bildet der Bohrkörper 33 an seiner in Drehrichtung angeordneten stirnseitigen Kante eine Schneidkante 331 aus, wobei wiederum am äußeren Ende der Schneidkante 331 eine stirnseitige Schneidecke 334 ausgebildet ist. In Richtung zum Schaftteil 2 setzt sich die Schneidkante fort bis zur Trennfläche 34, an der die Schneidkante eine schaftseitige Schneidecke 335 ausbildet.

Das Drehmoment-Aufnahmeelement 30 erstreckt sich, was beispielsweise aus FIG 7 ersichtlich ist, von der Trennfläche 34 zur Bohrkörper-Zwischenfläche 323 und grenzt an die Bohrkörper-Zwischenfläche 323 an.

Der Drehmoment-Aufnahme-Bereich 30 weist in Richtung zur Bohrkörper-Zwischenfläche 323 eine Neigung entgegen der Drehrichtung auf, kann jedoch auch parallel zur Drehachse D verlaufen.

Das Drehmoment-Aufnahmeelement 31 erstreckt sich entsprechend von der Trennfläche 34 zur Bohrkörper-Zwischenfläche 333 und grenzt an die Bohrkörper-Zwischenfläche 333 an.

Der Drehmoment-Aufnahme-Bereich 31 weist, wie der Drehmoment-Aufnahme-Bereich 30, in Richtung zur Bohrkörper-Zwischenfläche 333 eine Neigung entgegen der Drehrichtung auf, kann jedoch auch parallel zur Drehachse D verlaufen.

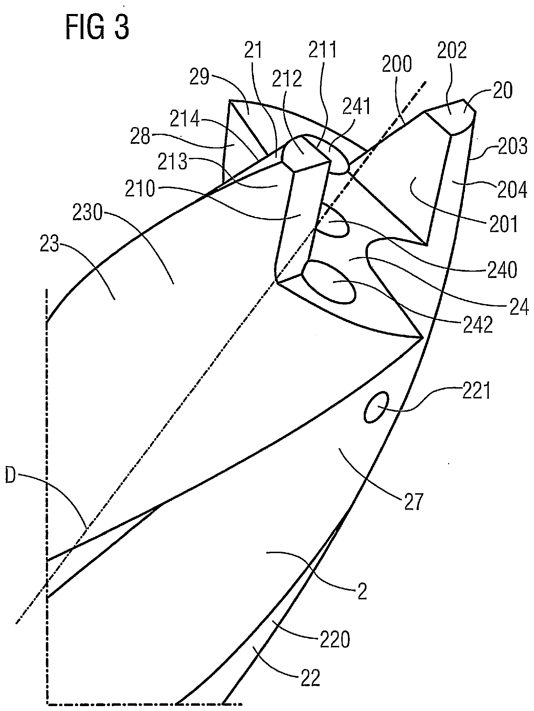

Das Schaftteil 2 weist, wie auch aus FIG 3 erkennbar, an seiner Stirnseite 29 eine Trennfläche 24 auf, die senkrecht zur Drehachse D verläuft, und, an den Außenrändern der Trennfläche 24, zwei stirnseitig vorspringende Drehmoment-Übertragungselemente 20 und 21 auf.

Das Drehmoment-Übertragungselement 20 weist an seiner Stirnseite eine Stirnfläche 202 auf, an die, jeweils zumindest in etwa rechtwinklig, außenseitig eine Außenfläche 203 sowie, in Blickrichtung auf das Schaftteil 2 in Richtung entgegen den Uhrzeigersinn, eine Drehmoment-Übertragungsfläche 200, eine nach innen gerichtete Zentrierfläche 201 und eine Drehmoment-Übertragungs-Gegenfläche 204 angrenzen.

Die Außenfläche 203 geht an ihrem von der Stirnseite 202 abgewandten Ende gleitend in die Außenfläche 220 des Bohrkörpers 22 über und weist eine Krümmung zumindest in etwa wie die Außenfläche 220 des Bohrkörpers 22 auf.

Die Drehmoment-Übertragungsfläche 200 sowie die Zentrierfläche 201 sind eben oder gekrümmt ausgebildet und gehen an ihrem von der Stirnseite 202 abgewandten Ende jeweils in etwa rechtwinklig oder unter einem anderen Winkel in die Trennfläche (oder: Verbindungsfläche) 24 über.

Die Drehmoment-Übertragungs-Gegenfläche 204 geht an ihrem von der Stirnseite 202 abgewandten Ende gleitend in die Spannut 27 über.

Das Drehmoment-Übertragungselement 21 weist in entsprechender Weise an seiner Stirnseite eine Stirnfläche 212 auf, an die, jeweils zumindest in etwa rechtwinklig, außenseitig eine Außenfläche 213 sowie, in Blickrichtung auf das Schaftteil 2 in Richtung entgegen dem Uhrzeigersinn, eine Drehmoment-Übertragungsfläche 210, eine nach innen gerichtete Zentrierfläche 211 und eine Drehmoment-Übertragungs-Gegenfläche 214 angrenzen.

Die Außenfläche 213 geht an ihrem von der Stirnseite 212 abgewandten Ende gleitend in die Außenfläche 230 des Bohrkörpers 23 über und weist eine Krümmung zumindest in etwa wie die Außenfläche 230 des Bohrkörpers 23 auf.

Die Drehmoment-Übertragungsfläche 210 sowie die Zentrierfläche 211 sind eben oder gekrümmt ausgebildet und gehen an ihrem von der Stirnseite 212 abgewandten Ende jeweils in etwa rechtwinklig oder unter einem anderen Winkel in die Trennfläche (oder: Verbindungsfläche) 24 über.

Die Drehmoment-Übertragungs-Gegenfläche 214 geht an ihrem von der Stirnseite 202 abgewandten Ende gleitend in die Spannut 28 über.

Korrespondierend zur Trennfläche (oder: Verbindungsfläche) 24 bildet das Schneidteil 3 eine Trennfläche (oder: Verbindungsfläche) 34 aus, die ebenfalls senkrecht zur Drehachse D verläuft.

In korrespondierender Weise zum Drehmoment-Übertragungselement 20 ist am Schneidteil 3 ein Drehmoment-Aufnahmebereich 30 ausgebildet, der eine an die Drehmoment-Übertragungsfläche 200 flächig anlegbare Drehmoment-Aufnahmefläche 300 sowie eine an Zentrierfläche 201 flächig anlegbare Zentrier-Gegenfläche 301 aufweist. Dies ist aus FIG 2 sowie aus den FIG 4 bis 8 erkennbar, wobei FIG 3 und FIG 7 miteinander kombinierbare Ausführungsformen zeigen. Insofern korrespondiert die Drehmoment-Aufnahmefläche 300 mit der Drehmoment-Übertragungsfläche 200 und die Zentrier-Gegenfläche 301 mit der Zentrierfläche 201. Die Zentrier-Gegenfläche 301 und die Drehmoment-Aufnahmefläche 300 stehen in einem Winkel von etwa 90° zueinander.

In korrespondierender Weise zum Drehmoment-Übertragungselement 21 ist weiterhin am Schneidteil 3 ein Drehmoment-Aufnahmebereich 31 ausgebildet, der eine Drehmoment-Aufnahmefläche 310 sowie eine Zentrier-Gegenfläche 311 aufweist. Dies ist ebenfalls aus FIG 2 sowie teilweise aus den FIG 4 bis 8 erkennbar. Dabei korrespondiert die Drehmoment-Aufnahmefläche 310 mit der Drehmoment-Übertragungsfläche 210 und die Zentrier-Gegenfläche 311 mit der Zentrierfläche 211. Auch die Zentrier-Gegenfläche 311 und die Drehmoment-Aufnahmefläche 310 stehen in einem Winkel von etwa 90° zueinander.

Des Weiteren ist am Schneidteil 3 gemäß den FIG 1, 4, 6, 7 und 8 ein zentraler Bolzen 340 als Zentrierbolzen angeordnet, der sich vom Zentrum der Trennfläche 34 in Richtung zum Schaftteil 2 erstreckt. In korrespondierender Weise ist in das Schafteil 2 eine zentrale Bohrung 240 eingebracht, in die der Bolzen 340 kreisförmig eingreift und so ebenfalls das Schneidteil 3 in Bezug auf das Schaftteil 2 zentriert.

FIG 2 zeigt alternativ eine Schraube 42, die in eine entsprechende Durchgangsbohrung 243 eingeführt ist, die zentral innerhalb des Schaftteils 2 angeordnet ist. Die Schraube 42 erstreckt sich mit ihrem ersten Ende stirnseitig in Richtung des Schneidteils 3 und durchquert das Schaftteil 2 entlang von dessen Drehachse D, wobei das entgegengesetzte zweite Ende einen Innensechskant 420 zur Justierung der Schraube 42 aufweist.

Das Schneidteil 3 umfasst in korrespondierender Weise eine Gewindebohrung 343, die ein Gewinde aufweist, in das die Schraube 42 eingreifen kann.

FIG 6 zeigt einen Gewindestift 43 mit einem Außengewinde 430, der seitlich unter einem Winkel durch eine geeignete, nicht dargestellte, von der Stirnseite weggerichtete Gewindebohrung durch das Schaftteil bis zu einer innerhalb des Schaftteils angeordneten Ausnehmung 350 im Bolzen 340 des Schneidteils 3 geschraubt werden kann, womit der Bolzen 340 und somit das Schneidteil 3 am Schaftteil fixiert werden kann (whistle notch).

FIG 1 hingegen zeigt zwei Schrauben 40 und 41, die unter einem Winkel in eine Bohrung 341 und eine Bohrung 342 des Schneidteils 3 eingreifen, wobei zusätzlich am Schaftteil 2 zwei Gewindebohrungen 241 und 242 angebracht sind, in die die Schrauben 40 und 41 eingreifen können.

Innerhalb der Bohrkörper 22 und 23 des Schaftteils 2 können in an sich bekannter Weise spiralförmig oder auch gerade verlaufende Kühlmittelkanäle 221 und 231 ausgebildet sein, von denen jedoch in den FIG nur die Austrittsöffnung des Kühlmittelkanals 221 erkennbar ist.

FIG 4 zeigt eine weitere Ausführungsform des erfindungsgemäßen Schneidteils 3 mit Drehmoment-Aufnahmefläche 302 und Zentrier-Gegenfläche 303. Die Drehmoment-Aufnahmefläche 302 weist eine Krümmung entgegen der Drehrichtung auf.

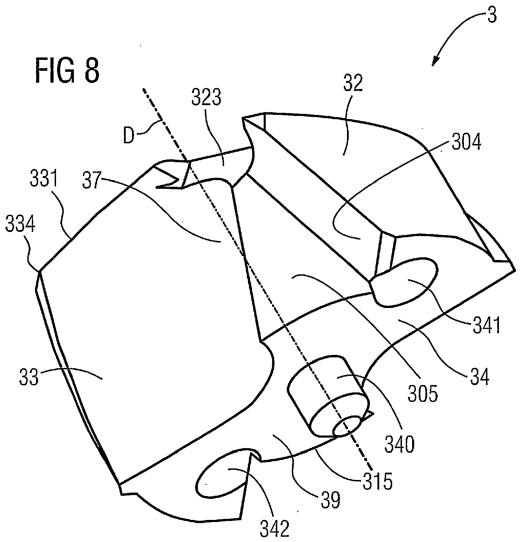

FIG 8 zeigt eine weitere Ausführungsform eines erfindungsgemäßen Schneidteils 3 mit gerader, nicht gekrümmter Drehmoment-Aufnahmefläche 304 und Zentrier-Gegenfläche 305. Die Zentrier-Gegenfläche 305 weist eine radiale Krümmung auf. Das zugehörige, nicht gezeigte DrehmomentÜbertragungselement des Schaftteils 2 ist in korrespondierender Weise geformt.

Zum Betrieb des modularen Bohrers 1 wird insofern das Schneidteil 3 durch Schrauben 40 und 41 und/oder eine Schraube 42 und/oder den Bolzen 340 am Schaftteil 2 befestigt, was eine Fixierung in axialer und, insbesondere durch den Bolzen 340, in radialer Richtung bewirkt.

Das Schneidteil 3 kann des weiteren gegenüber dem Schaftteil 2 durch die Zentrierflächen 201, 211 in radialer Richtung fixiert sein und kann über die Drehmoment-Übertragungsflächen 200, 210 das erforderliche Drehmoment M übertragen.

Die Zentrierfläche 201 in Korrespondenz mit der Zentrier-Gegenfläche 301 bewirkt zusammen mit der Zentrierfläche 211 in Korrespondenz mit der Zentrier-Gegenfläche 311 eine radiale Zentrierung des Schneidteils 3 in Bezug auf das Schaftteil 2.

Insofern ermöglichen die Drehmoment-Übertragungselemente 20 und 21 sowohl eine radiale Zentrierung des Schneidteils 3 in Bezug auf das Schaftteil 2 als auch eine gute Übertragung des Drehmoments vom Schneidteil 3 auf das Schaftteil 2.

Der in FIG 6 ersichtliche Winkel α3 der Drehmoment-Aufnahmefläche 300 zur Bohrerachse D beträgt vorzugsweise etwa 20° in Gegendrehrichtung.

Ein erster Übergangsbereich 308 ist, jeweils winklig, zwischen der ersten Drehmoment-Aufnahmefläche 300 und der Trennfläche 34 angeordnet und ein zweiter Übergangsbereich 318 verläuft zwischen einer zweiten Drehmoment-Aufnahmefläche 310 und der Trennfläche 34. Dies ist ebenfalls in FIG 5 erkennbar.

Der erste Übergangsbereich 308 verläuft parallel zum zweiten Übergangsbereich 318. Der erste Übergangsbereich 308 weist, senkrecht zur Verlaufsrichtung der Längskanten der Übergangsbereiche 308 und 318 gemessen, vom zweiten Übergangsbereich 318 einen Abstand A von etwa 50% des halben Bohrerdurchmessers B auf.

Die Schrauben 40 und 41 sind, wie in FIG 1 sowie FIG 5 gezeigt, jeweils in einem Winkel zur Drehachse D geneigt. Dies stellt eine bevorzugte Ausführungsform der Erfindung dar. Die geneigten Schrauben 40 und 41 ermöglichen eine radiale spielfreie Montage des Schneidteils 3, da die Drehmoment-Übertragungsflächen und die korrespondierenden Drehmoment-Übertragungsgegenflächen gegeneinander verspannt werden.

Zur Verwirklichung des Winkels der Schrauben 40 und 41 zur Drehachse D sind die Mittelachsen für die zugehörigen Schraubenbohrungen 341, 342 schräg gestellt.

Die Mittelachse für die Schraubenbohrung 341 liegt dabei sowohl auf einer ersten Ebene K als auch auf einer dritten Ebene P.

Die erste Ebene K steht in einem Winkel im allgemeinen zwischen 50° und 85°, für die konkrete Ausführungsform von etwa 68°, zu einer zweiten Ebene N durch die schaftseitigen Schneidecken 325, 335 sowie durch die Drehachse, wobei der Abstand der ersten Ebene K zur Drehachse D im allgemeinen zwischen 40% und 70%, für die konkrete Ausführungsform ungefähr 60%, des halben Bohrerdurchmessers B beträgt. Die Ebene K verläuft parallel zur Drehachse D.

Die dritte Ebene P steht in einem Winkel von etwa 90° zur ersten Ebene K und ist um etwa 40% bis 60% des Drallwinkels geneigt.

Die Mittelachse für die Schraubenbohrung 342 liegt sowohl auf einer ersten Ebene L als auch auf einer dritten Ebene Q.

Die erste Ebene L steht in einem Winkel im allgemeinen zwischen 50° und 85°, für die konkrete Ausführungsform von etwa 68°, zur zweiten Ebene N durch die schaftseitigen Schneidecken 325, 335 sowie durch die Drehachse, wobei der Abstand der ersten Ebene L zur Drehachse D im allgemeinen zwischen 40% und 70%, für die konkrete Ausführungsform ungefähr 60% des halben Bohrerdurchmessers B beträgt. Die Ebene L verläuft parallel zur Drehachse D.

Die dritte Ebene Q steht in einem Winkel von etwa 90° zur ersten Ebene L und ist um etwa 40% bis 60% des Drallwinkels geneigt.

FIG 5 zeigt hierzu die erste Ebene K und die dazu parallele Ebene L, die im Allgemeinen zwischen 40% und 70%, in der konkreten Ausführungsform etwa 60%, des halben Bohrerdurchmessers von der Bohrerachse D entfernt sind, zu dieser parallel sind, und dabei jeweils zur zweiten Ebene N durch die schaftseitigen Schneidecken 325 und 335 sowie die Drehachse D im allgemeinen zwischen 50° und 85°, für die konkrete Ausführungsform um etwa 68°, verdreht sind. Des weiteren zeigt FIG 5 jeweils einen Schnitt durch die Ebenen P und Q, wobei sich die Ebene P in Richtung zur Stirnseite des Schneidteils 3 parallel zur Mittelachse der Schraubenbohrung 341 und die Ebene Q in Richtung zur Stirnseite parallel zur Mittelachse der Schraubenbohrung 342 erstreckt.

Die Mittelachse der Schraubenbohrung 341 für die Befestigungsschraube 40 erstreckt sich auf der ersten Ebene K durch den Bohrkörper 32 in Bezug auf eine zur Drehachse D parallele Linie in einem Winkel von etwa 60% des Drallwinkels α1, der etwa 30° beträgt.

Die Mittelachse der Schraubenbohrung 342 für die Befestigungsschraube 41 erstreckt sich auf der Ebene L durch den Bohrkörper 34 in Bezug auf eine zur Drehachse D parallele Linie in einem Winkel von etwa 60% des Drallwinkels α1.

In der Ausführungsform gemäß FIG 1 und FIG 5 beträgt der Schraubendurchmesser S der Schrauben 40 und 41 10 % bis 30 %, vorzugsweise etwa 15 %, des Durchmessers B des Bohrers 1.

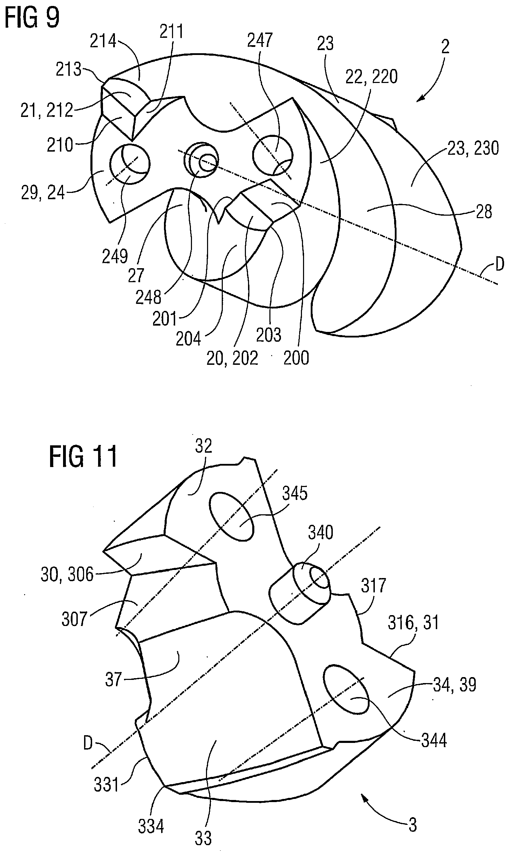

FIG 9 zeigt ein weiteres Schaftteil 2, das mit dem Schneidteil 3 gemäß FIG 8 korrespondiert.

Das Schaftteil 2 weist wiederum an seiner Stirnseite 29 eine Trennfläche 24 auf, die senkrecht zur Drehachse D verläuft, und, an den Außenrändern der Trennfläche 24, zwei stirnseitig vorspringende Drehmoment-Übertragungselemente 20 und 21 auf.

Das Drehmoment-Übertragungselement 20 weist an seiner Stirnseite eine Stirnfläche 202 auf, an die, jeweils zumindest in etwa rechtwinkling, außenseitig eine Außenfläche 203 sowie, in Blickrichtung auf das Schaftteil 2 in Richtung entgegen den Uhrzeigersinn, eine Drehmoment-Übertragungsfläche 200, eine nach innen gerichtete Zentrierfläche 201 und eine Drehmoment-Übertragungs-Gegenfläche 204 angrenzen.

Die Außenfläche 203 geht an ihrem von der Stirnseite 202 abgewandten Ende gleitend in die Außenfläche 220 des Bohrkörpers 22 über und weist eine Krümmung zumindest in etwa wie die Außenfläche 220 des Bohrkörpers 22 auf.

Die Drehmoment-Übertragungsfläche 200 gemäß FIG 9 ist eben ausgebildet und geht an ihrem von der Stirnseite 202 abgewandten Ende unter einem Winkel von etwa 110° in die Trennfläche (oder: Verbindungsfläche) 24 über, wobei auch ein anderer Winkel möglich ist.

Die Zentrierfläche 201 gemäß FIG 9 ist korrespondierend zur Fläche 305 des Schneidteils 3 gemäß FIG 8 tangential gekrümmt ausgebildet und geht an ihrem von der Stirnseite 202 abgewandten Ende etwa unter einem rechten Winkel in die Trennfläche (oder: Verbindungsfläche) 24 über, wobei in Korrespondenz mit der Fläche 305 gemäß FIG 8 auch ein anderer Winkel möglich ist.

Die Drehmoment-Übertragungs-Gegenfläche 204 gemäß FIG 9 geht an ihrem von der Stirnseite 202 abgewandten Ende gleitend in die Spannut 27 über.

Das Drehmoment-Übertragungselement 21 weist in entsprechender Weise an seiner Stirnseite eine Stirnfläche 212 auf, an die, jeweils zumindest in etwa rechtwinklig, außenseitig eine Außenfläche 213 sowie, in Blickrichtung auf das Schaftteil 2 in Richtung entgegen dem Uhrzeigersinn, eine Drehmoment-Übertragungsfläche 210, eine nach innen gerichtete Zentrierfläche 211 und eine Drehmoment-Übertragungs-Gegenfläche 214 angrenzen.

Die Außenfläche 213 geht an ihrem von der Stirnseite 212 abgewandten Ende gleitend in die Außenfläche 230 des Bohrkörpers 23 über und weist eine Krümmung zumindest in etwa wie die Außenfläche 230 des Bohrkörpers 23 auf.

Die Drehmoment-Übertragungsfläche 210 ist eben ausgebildet und geht an ihrem von der Stirnseite 212 abgewandten Ende unter einem Winkel von etwa 110° in die Trennfläche (oder: Verbindungsfläche) 24 über, wobei in Korrespondenz mit der entsprechenden Fläche im Schneidteil gemäß FIG 8 auch ein anderer Winkel möglich ist.

Die Zentrierfläche 211 gemäß FIG 9 ist korrespondierend zur Fläche 315 gemäß FIG 8 tangential gekrümmt ausgebildet und geht an ihrem von der Stirnseite 212 abgewandten Ende etwa unter einem rechten Winkel in die Trennfläche (oder: Verbindungsfläche) 24 über, wobei wiederum korrespondierend mit der Fläche 315 auch ein anderer Winkel möglich ist.

Die Drehmoment-Übertragungs-Gegenfläche 214 gemäß FIG 9 geht an ihrem von der Stirnseite 212 abgewandten Ende gleitend in die Spannut 28 über.

Korrespondierend zur Trennfläche (oder: Verbindungsfläche) 24 gemäß FIG 9 bildet das Schneidteil 3 gemäß FIG 8 eine Trennfläche (oder: Verbindungsfläche) 34 aus, die ebenfalls senkrecht zur Drehachse D verläuft.

Das Schneidteil 3 gemäß FIG 9 kann des weiteren gegenüber dem Schaftteil 2 durch die Zentrierflächen 201, 211 in radialer Richtung fixiert sein und kann über die Drehmoment-Übertragungsflächen 200, 210 das erforderliche Drehmoment M übertragen.

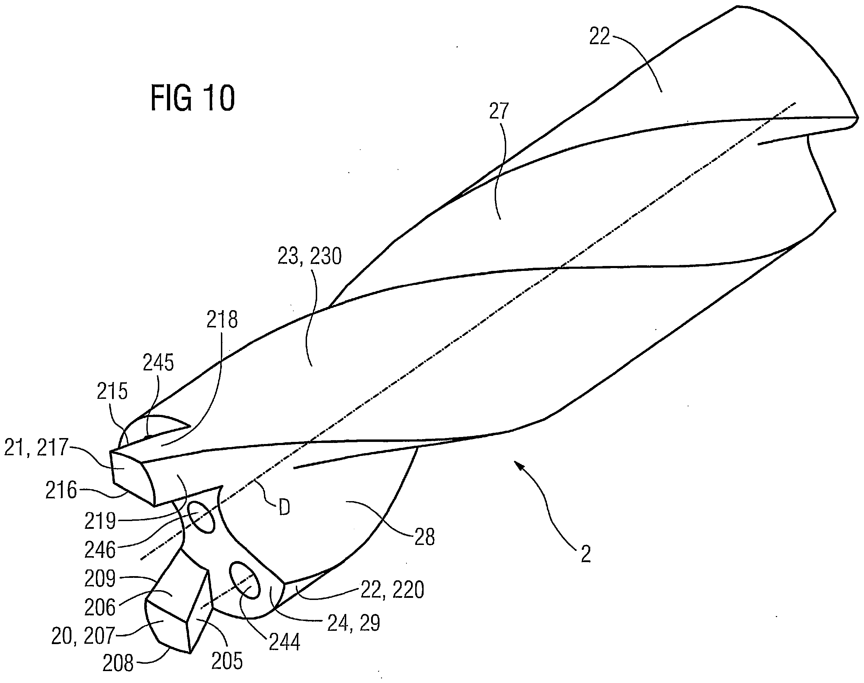

FIG 10 zeigt ein weiteres Schaftteil 2, das mit dem Schneidteil 3 gemäß FIG 11 korrespondiert.

Das Schaftteil 2 gemäß FIG 10 weist an seiner Stirnseite 29 eine Trennfläche 24 auf, die senkrecht zur Drehachse D verläuft, und an den Außenrändern der Trennfläche 24 zwei stirnseitig vorspringende Drehmoment-Übertragungselemente 20 und 21.

Das Drehmoment-Übertragungselement 20 weist an seiner Stirnseite eine Stirnfläche 207 auf, an die, jeweils zumindest in etwa rechtwinkling, außenseitig eine Außenfläche 208 sowie, in Blickrichtung auf das Schaftteil 2 in Richtung entgegen den Uhrzeigersinn, eine Drehmoment-Übertragungsfläche 205, eine nach innen gerichtete Zentrierfläche 206 und eine Drehmoment-Übertragungs-Gegenfläche 209 angrenzen.

Die Außenfläche 208 geht an ihrem von der Stirnseite 207 abgewandten Ende gleitend in die Außenfläche 220 des Bohrkörpers 22 über und weist eine Krümmung zumindest in etwa wie die Außenfläche 220 des Bohrkörpers 22 auf.

Die Drehmoment-Übertragungsfläche 205 ist eben ausgebildet und geht an ihrem von der Stirnseite 207 abgewandten Ende unter einem Winkel von etwa 60° in die Trennfläche (oder: Verbindungsfläche) 24 über, wobei in Korrespondenz mit der entsprechenden Fläche am Schneidteil 3 gemäß FIG 11 auch ein anderer Winkel möglich ist.

Die Zentrierfläche 206 gemäß FIG 10 ist gekrümmt ausgebildet und geht an ihrem von der Stirnseite 207 abgewandten Ende etwa unter einem rechten Winkel in die Trennfläche (oder: Verbindungsfläche) 24 über, wobei in Korrespondenz mit der entsprechenden Fläche am Schneidteil 3 gemäß FIG 11 auch ein anderer Winkel möglich ist.

Die Drehmoment-Übertragungs-Gegenfläche 209 gemäß FIG 10 geht an ihrem von der Stirnseite 207 abgewandten Ende gleitend in die Spannut 27 über.

Das Drehmoment-Übertragungselement 21 weist in entsprechender Weise an seiner Stirnseite eine Stirnfläche 217 auf, an die, jeweils zumindest in etwa rechtwinklig, außenseitig eine Außenfläche 218 sowie, in Blickrichtung auf das Schaftteil 2 in Richtung entgegen dem Uhrzeigersinn, eine Drehmoment-Übertragungsfläche 215, eine nach innen gerichtete Zentrierfläche 216 und eine Drehmoment-Übertragungs-Gegenfläche 219 angrenzen.

Die Außenfläche 218 geht an ihrem von der Stirnseite 217 abgewandten Ende gleitend in die Außenfläche 230 des Bohrkörpers 23 über und weist eine tangentiale Krümmung zumindest in etwa wie die Außenfläche 230 des Bohrkörpers 23 auf.

Die Drehmoment-Übertragungsfläche 215 gemäß FIG 10 ist eben ausgebildet und geht an ihrem von der Stirnseite 217 abgewandten Ende unter einem Winkel von etwa 60° in die Trennfläche (oder: Verbindungsfläche) 24 über, wobei entsprechend zur zugehörigen Fläche gemäß FIG 11 auch ein anderer Winkel möglich ist.

Die Zentrierfläche 216 gemäß FIG 10 ist gekrümmt ausgebildet und geht an ihrem von der Stirnseite 217 abgewandten Ende etwa unter einem rechten Winkel in die Trennfläche (oder: Verbindungsfläche) 24 über, wobei entsprechend zur zugehörigen Fläche gemäß FIG 11 auch ein anderer Winkel möglich ist.

Die Drehmoment-Übertragungs-Gegenfläche 219 gemäß FIG 10 geht an ihrem von der Stirnseite 217 abgewandten Ende gleitend in die Spannut 28 über.

Korrespondierend zur Trennfläche (oder: Verbindungsfläche) 24 gemäß FIG 10 bildet das Schneidteil 3 gemäß FIG 11 eine Trennfläche (oder: Verbindungsfläche) 34 aus, die ebenfalls senkrecht zur Drehachse D verläuft.

FIG 11 zeigt ein zum Schaftteil 2 gemäß FIG 10 gehöriges Schneidteil 3.

In korrespondierender Weise zum Drehmoment-Übertragungselement 20 gemäß FIG 10 ist am Schneidteil 3 gemäß FIG 11 ein Drehmoment-Aufnahmebereich 30 ausgebildet, der eine an die Drehmoment-Übertragungsfläche 205 flächig anlegbare Drehmoment-Aufnahmefläche 306 sowie eine an Zentrierfläche 206 flächig anlegbare Zentrier-Gegenfläche 307 aufweist.

Insofern korrespondiert die Drehmoment-Aufnahmefläche 306 gemäß FIG 11 mit der Drehmoment-Übertragungsfläche 205 gemäß FIG 10 und die Zentrier-Gegenfläche 307 mit der Zentrierfläche 206. Die Zentrier-Gegenfläche 307 und die Drehmoment-Aufnahmefläche 306 stehen in einem Winkel von etwa 90° zueinander.

Der Winkel der Drehmoment-Aufnahmefläche 306 zur Bohrerachse D beträgt vorzugsweise etwa 30° in Drehrichtung.

In korrespondierender Weise zum Drehmoment-Übertragungselement 21 gemäß FIG 10 ist weiterhin am Schneidteil 3 gemäß FIG 11 ein Drehmoment-Aufnahmebereich 31 ausgebildet, der eine Drehmoment-Aufnahmefläche 316 sowie eine Zentrier-Gegenfläche 317 aufweist.

Dabei korrespondiert die Drehmoment-Aufnahmefläche 316 gemäß FIG 11 mit der Drehmoment-Übertragungsfläche 215 gemäß FIG 10 und die Zentrier-Gegenfläche 317 mit der Zentrierfläche 216. Auch die Zentrier-Gegenfläche 317 und die Drehmoment-Aufnahmefläche 316 stehen in einem Winkel von etwa 90° zueinander.

### Bezugszeichenliste

- 1: Bohrer
- 2: Schaftteil
- 20, 21: Drehmoment-Übertragungselement
- 200, 210: Drehmoment-Übertragungsflächen
- 201, 211: Zentrierflächen
- 202, 212: Stirnflächen
- 203, 213: Außenflächen
- 204, 214: Drehmoment-Übertragungs-Gegenflächen

- 22, 23: Bohrkörper
- 220, 230: Außenflächen des Bohrkörpers
- 221, 231: Kühlkanalbohrungen

- 24: Trennfläche
- 240: zentrale Bohrung
- 241,242: Gewindebohrungen
- 243: Durchgangsbohrung

- 27, 28: Spannuten
- 29: Stirnseite

- 3: Schneidteil
- 30, 31: Drehmoment-Aufnahmebereiche
- 300, 302, 304, 310: Drehmoment-Aufnahmeflächen
- 301, 303, 305, 311: Zentrier-Gegenfläche
- 308,318: Übergangsbereich

- 32, 33: Bohrkörper
- 320, 330: Außenflächen des Bohrkörpers
- 321, 331: Schneidkanten
- 322, 332: Bohrkörper-Stirnfläche
- 323, 333: Bohrkörper-Zwischenfläche
- 324, 334: stirnseitige Schneidecken
- 325, 335: schaftseitige Schneidecken
- 34: Trennfläche
- 340: Bolzen
- 341,342,343: Bohrungen
- 350: Ausnehmung
- 37, 38: Spannuten
- 39: Fußseite

- 40, 41, 42: Schrauben
- 420: Innensechskant
- 43: Gewindestift

- A, C, S: Abstände
- B: Bohrerdurchmesser
- D: Drehachse
- K, L, N, P, Q: Ebenen
- M: Drehmoment
- α1: Drallwinkel
- α2: Verdrehwinkel
- α3: Neigungswinkel

## Patentansprüche

1. Modularer Bohrer (1), umfassend
a) ein Schaftteil (2) mit einer Stirnseite (29),
α1) wobei das Schaftteils (2) um eine Drehachse (D) in einer Drehrichtung drehbar ist,
a2) wobei das Schaftteil (2) genau oder wenigstens zwei Bohrkörper (22, 23) parallel zur Drehachse (D) oder spiralförmig mit einem Drallwinkel (α1) um die Drehachse (D) verlaufend aufweist, die durch Spannuten (27, 28) voneinander getrennt sind,
a3) wobei das Schaftteil (2) an seiner Stirnseite (29) eine zumindest im wiesentlichen senkrecht zur Drehachse (D) verlaufende Trennfläche (24) aufweist,
b) ein Schneidteil (3),
b1) das um eine oder die Drehachse (D) drehbar ist, und das mit dem Schaftteil (2) an dessen Stirnseite (29) verbunden oder verbindbar ist,
b2) wobei das Schneidteil (3) wenigstens zwei Bohrkörper (32, 33) spiralförmig mit einem Drallwinkels (α1) von bevorzugt etwa 30° um die Drehachse (D) verlaufend aufweist, die durch Spannuten (37, 38) voneinander getrennt sind,
b3) wobei das Schneidteil (3) an seiner von der Stirnseite abgewandten Fußseire (39) eine zumindest im Wesentlichen senkrecht zur Drehachse (D) verlaufende Trennfläche (34) aufweist,
c) wobei das Schaftteil (2) wenigstens ein stirnseitig vorspringendes Drehmoment-Übertragungselement (20, 21) aufweist, wobei das wenigstens eine Drehmoment-Übertragungselement (20, 21) wenigstens eine Drehmoment-Übertragungsfläche (200, 210) zur Übertragung eines Drehmoments (M) in der Drehrichtung vom Schaftteil (2) auf das Schneidteil (3) aufweist,
c1) wobei das oder je ein Drehmoment-Übertragungselement (20, 21) am stirnseitigen Ende eines oder jedes Bohrkörpers (22, 23) ausgebildet ist oder das stirnseitige Ende ausbildet,
c2) wobei das oder jedes Drehmoment-Übertragungselement (20, 21) an seinem stirnseitigen Ende eine Stirnfläche (202, 212) umfasst,
c3) wobei an die Stirnfläche (202, 212) im Gegen-Uhrzeigersinn angrenzen
c31) wenigstens eine Außenfläche (203, 213), die andernends in eine Außenfläche (220, 230) des Bohrkörpers (22, 23) übergeht,
c32) die Drehmoment-Übertragungsfläche (200, 210), die andernends an die Trennfläche (24) angrenzt,
c33) die oder eine Zentrierfläche (201, 211), die andernends an die Trennfläche (29) angrenzt sowie
c34) eine Drehmoment-Übertragungs-Gegenfläche (204), die bevorzugt andernends in eine Spannut (27) übergeht,
d) wobei das Schneidteil (3) wenigstens einen Drehmoment-AufnahmeBereich (30, 31) zur Aufnahme des Drehmoments (M) aufweist, wobei der wenigstens eine (30, 31) wenigstens der wenigstens eine Drehmoment-Aufnahmebereich (30, 31) wenigstens eine mit der Drehmoment-Übertragungsfläche (200, 210) korrespondierende Drehmoment-Aufnahmefläche (300, 310) aufweist,
d1) wobei der oder jeder Bohrkörper (32, 33) an seinem stirnseitigen Ende eine Bohrkörper-Stirnfläche (322, 332) aufweist,
d2) an die in Gegendrehrichtung eine Bohrkörper-Zwischenfläche (323, 333) angrenzt, die einen Übergang zur oder zu einer Spannut (37, 38) ausbildet,
d3) wobei sich der oder je ein Drehmoment-Aufnahmebereich (30, 31) von der Trennfläche (34) zur Bohrkörper-Zwischenfläche (323, 333) und zur Bohrkörper-Stirnfläche (322, 332) erstreckt und an die Bohrkörperzwischenfläche (323, 333) und die Bohrkörper-Stirnfläche (322, 332) angrenzt,
d4) wobei der Drehmoment-Aufnahmebereich (30, 31) in Richtung zur Bohrkörper-Stirnfläche (322, 332) und zur Bohrkörper-Zwischenfläche (323, 333) parallel zur Drehachse (D) verläuft oder eine Neigung entgegen der Drehrichtung aufweist,
e) wobei das Schneidteil (3) wenigstens ein Zentrierelement zur radialen Zentrierung des Schneidteils (3) in Bezug auf das Schaftteil (2) aufweist,
f) wobei das Schneidteil (3) über ein zumindest überwiegend in axialer Richtung wirkendes Verspann-Element mit dem Schaftteil (2) verspannt oder verspannbar ist,
g) wobei des Bohrer einen Bohrerdurchmesser (B) aufweist,
h) wobei das Verspann-Element
h1) im Schneidteil (3) Bohrungen oder Schraubenbohrungen (341, 342) für Befestigungsschrauben (40, 41) sowie bevorzugt Befestigungsschrauben (40, 41) aufweist,
h2) wobei das Schaftteil (2) Gewindebohrungen (241, 242) für die Befestigungsschrauben (40, 41) aufweist, vorzugsweise als Fortsetzung der Bohrungen im Schneidteil (3).

2. Modularer Bohrer nach Anspruch 1,
a) wobei die Trennfläche (24) des Schaftteils (2) und die Trennfläche (34) des Schneidteils (3) flächig, insbesondere sich berührend, aneinander angrenzen oder aneinander angrenzen können.

3. Modulares Bohrer nach einem der vorhergehenden Ansprüche,
a) wobei der oder jeder Bohrkörper (32, 33) an seiner in Drehrichtung angeordneten stirnseitigen Kante eine Schneidkante (321, 331) ausbildet und/oder
b) wobei am oder an jedem äußeren Ende der oder jeder Schneidkante eine Schneidecke (324, 334) ausgebildet ist,
c) bevorzugt eine stirnseitige Schneidecke (324, 334) an der Stirnseite des Schneidteils (3) und/oder eine schaftseitige Schneidecke (325, 335) an der Trennfläche des Schneidteils (3),

4. Modularer Bohrer nach Anspruch 1,
a) wobei das Drehmoment-Übertragungselement (20, 21) wenigstens eine Zentrierfläche (201, 211) zur radialen Zentrierung des Schneidteils (3) in Bezug auf das Schaftteil (2) aufweist,
b) wobei der wenigstens eine Drehmoment-Aufnahmebereich (30, 31) eine mit der Zentrierfläche (201, 211) korrespondierende Zentrier-Gegenfläche (301, 311) aufweist,
c) wobei die wenigstens eine Zentrierfläche (201, 211) zusammen mit der Zentrier-Gegenfläche (301, 311) das oder ein Zentrierelement ausbildet.

5. Modularer Bohrer nach einem der vorhergehenden Ansprüche,
a) wobei der Bolzen (340) und die zentrale Bohrung (240) das oder ein Zentrierelement ausbilden und/oder
b) wobei den Bolzen (340) in die zentrale Bohrung (240) eingreift oder eingreifen kann und/oder ein Zentrierelement zur radialen Zentrierung und/oder Stabilisierung des Schneidteils (3) in Bezug auf das Schaftteil (2) ausbildet und/oder
c) wobei die Befestigungsschrauben (40, 41) einen Durchmesser (S) zwischen 10% und 30%, bevorzugt von etwa 15%, des Bohrerdurchmessers (B) aufweisen.

6. Modularer Bohrer nach einem der vorhergehenden Ansprüche,
a) wobei das Schneidteil (3) einen Bohrerdurchmesser (B) aufweist,
b) wobei das Schneidteil (3) zwei Bohrkörper (32, 33) aufweist,
c) wobei wenigstens eine erste Ebene (K, L)
c1) bevorzugt 40% bis 70%, besonders bevorzugt etwa 60%, des halben Bohrerdurchmessers (B) von der Drehachse (D) entfernt ist,
c2) zur Drehachse (D) parallel ist und
c3) zu einer zweiten Ebene (N) durch die schaftseitigen Schneidecken (325, 335) der beiden Rohrkörper (32, 33), in der vorzugsweise die Drehachse (D) verläuft, um 50° bis 85°, vorzugsweise etwa 68°, verdreht ist,
d) wobei sich die Mittelachse für eine oder jede Schraubenbohrung (341, 342) für die Befestigungsschrauben (40, 41) jeweils auf der ersten Ebene (K, L), insbesondere in Bezug auf eine zur Drehachse (D) zumindest in etwa parallele Linie in einem Winkel, vorzugsweise in einem Winkel von etwa 30% bis 80%, besonders bevorzugt von etwa 40% bis 60%, des Drallwinkel (α1) erstreckt.

7. Modularer Bohrer nach einem der vorhergehenden Ansprüche,
a) wobei das Schneidteil (3) einen Bohrerdurchmesser (B) aufweist,
b) wobei das Schneidteil (3) zwei Bohrkörper (32, 33) aufweist,
c) wobei die Mittelachse für eine oder jede Schraubenbohrung (341, 342) für die Befestigungsschrauben (40, 41) jeweils auf einer ersten Ebene (K, L) sowie auf einer dritten Ebene (P, Q) verläuft,
c1) wobei die erste Ebene (K, L)
c11) in einem Winkel von 50° bis 85°, bevorzugt etwa 68°, zu einer zweiten Ebene (N) durch die schaftseitigen Schneidecken (325, 335) sowie zumindest im Wesentlichen durch die Drehachse (D) verläuft und
c12) zumindest im Wesentlichen parallel zur Drehachse (D) verläuft, wobei der Abstand der ersten Ebene (K, L) zur Drehachse (D) bevorzugt 40% bis 70%, besonders bevorzugt ungefähr 60%, des halben Bohrerdurchmessers (B) beträgt und
c2) wobei die dritte Ebene (P, Q) in einem Winkel von etwa 90° zur ersten Ebene (K, L) steht und/oder um etwa 40% bis 60% des Drallwinkels geneigt ist.

8. Modularer Bohrer nach einem der vorhergehenden Ansprüche,
a) wobei innerhalb wenigstens eines oder jedes Bohrkörpers (22, 23) wenigstens eine oder je eine Kühlkanalbohrung (221, 231) verläuft, ,
b) wobei die wenigstens eine Kühlkanalbohrung (221, 231) vorzugsweise korrespondierend zum Verlauf des Bohrkörpers (22, 23) in Bezug auf die Drehachse (D), insbesondere parallel zur oder spiralförmig um die Drehachse (D) verläuft und/oder
c) wobei die wenigstens eine Kühlkanalbohrung (221, 231) in wenigstens einer Spannut (27, 28) des Schaftteils (2) austritt.

9. Modularer Bohrer nach einem der vorhergehenden Ansprüche,
a) wobei die Drehmoment-Übertragungsfläche (200, 210) und/oder die Drehmoment-Aufnahmefläche (300, 310) gerade, konvex oder konkav ausgebildet sind und/oder
b) wobei die Drehmoment-Übertragungsfläche (200, 210) und/oder die Drehmoment-Aufnahmefläche (300, 310) in einem positiven oder negativen Winkel (α3) zwischen 5° und 35°, bevorzugt zwischen 15° und 30°, besonders bevorzugt von zumindest in etwa 20°, zur Drehachse (D) verlaufen.

10. Modularer Bohrer nach einem der vorhergehenden Ansprüche,
a) wobei der Bohrer einen Bohrerdurchmesser (B) aufweist,
b) wobei die Drehmoment-Aufnahmefläche (300, 310) winklig zur Trennfläche (24) verläuft und/oder
c) wobei ein erster Übergangsbereich (308) zwischen einer ersten Drehmoment-Aufnahmefläche (300) und der Trennfläche (34) und ein zweiter Übergangsbereich (318) zwischen einer zweiten Drehmoment-Aufnahmefläche (310) und der Trennfläche (34) verläuft,
d) wobei die Längskanten des ersten Übergangsbereichs (308) zumindest annähernd parallel zu den Längskanten des zweiten Übergangsbereichs (318) verlaufen und/oder
e) wobei die Längskanten des ersten Übergangsbereichs (308) von den Längskanten des zweiten Übergangsbereichs (318), senkrecht zur Verlaufsrichtung der Längskanten gemessen, einen Abstand (A) von etwa 40 bis 60%, bevorzugt von etwa 50%, des halben Bohrerdurchmessers (B) aufweisen.

11. Modularer Bohrer nach einem der vorhergehenden Ansprüche,
wobei die Zentrierfläche (201, 211) und/oder die Zentrier-Gegenfläche (301, 311) eben oder gekrümmt ausgebildet sind, insbesondere als Teil einer Zylindermantelfläche mit der Drehachse (D) als Mittelachse.

12. Modularer Bohrer nach einem der vorhergehenden Ansprüche,
a) wobei die Drehmoment-Aufnahmefläche (300, 310) an die Zentrier-Gegenfläche (301, 311) unter einem Winkel angrenzt, wobei der Winkel etwa 90° beträgt und/oder
b) wobei die Drehmoment-Übertragungsfläche (200, 210) an die Zentrierfläche (201, 211) unter einem Winkel angrenzt, wobei der Winkel etwa 90° beträgt

## Claims

1. Modular drill (1), comprising
a) a shank part (2) with an end side (29),
a1) the shank part (2) being rotatable in a rotational direction about a rotational axis (D),
a2) the shank part (2) having exactly or at least two drill bodies (22, 23) extending parallel to the rotational axis (D) or helically around the rotational axis (D) at a helix angle (α1), which drill bodies (22, 23) are separated from one another by flutes (27, 28),
a3) the shank part (2) having, on its end side (29), a dividing face (24) which extends at least substantially perpendicularly with respect to the rotational axis (D),
b) a cutting part (3)
b1) which is rotatable about a or the rotational axis (D), and which is connected or can be connected to the shank part (2) at its end side (29),
b2) the cutting part (3) having at least two drill bodies (32, 33) extending helically around the rotational axis (D) at a or the helix angle (α1) of preferably approximately 30°, which drill bodies (32, 33) are separated from one another by flutes (37, 38),
b3) the cutting part (3) having, on its base side (39) which is remote from the end side, a dividing face (34) which extends at least substantially perpendicularly with respect to the rotational axis (D),
c) the shank part (2) having at least one torque transmission element (20, 21) which projects on the end side, the at least one torque transmission element (20, 21) having at least one torque transmission face (200, 210) for transmitting a torque (M) in the rotational direction from the shank part (2) to the cutting part (3),
c1) the or in each case one torque transmission element (20, 21) being formed at the end-side end of a or each drill body (22, 23) or forming the end-side end,
c2) the or each torque transmission element (20, 21) comprising an end face (202, 212) at its end-side end,
c3) the following adjoining the end face (202, 212) in the counterclockwise direction:
c31) at least one outer face (203, 213) which merges at the other end into an outer face (220, 230) of the drill body (22, 23),
c32) the torque transmission face (200, 210) which adjoins the dividing face (24) at the other end,
c33) the or a centering face (201, 211) which adjoins the dividing face (29) at the other end, and
c34) a mating torque transmission face (204) which preferably merges at the other end into a flute (27),
d) the cutting part (3) having at least one torque receiving region (30, 31) for receiving the torque (M), the at least one torque receiving region (30, 31) having at least one torque receiving face (300, 310) which corresponds with the torque transmission face (200, 210),
d1) the or each drill body (32, 33) having a drill body end face (322, 332) at its end-side end,
d2) which drill body end face (322, 332) is adjoined in the opposite rotational direction by a drill body intermediate face (323, 333) which forms a transition to the or to a flute (37, 38),
d3) the or in each case one torque receiving region (30, 31) extending from the dividing face (34) to the drill body intermediate face (323, 333) and to the drill body end face (322, 332) and adjoining the drill body intermediate face (323, 333) and the drill body end face (322, 332),
d4) the torque receiving region (30, 31) extending parallel to the rotational axis (D) in the direction of the drill body end face (322, 332) and of the drill body intermediate face (323, 333) or having an inclination counter to the rotational direction,
e) the cutting part (3) having at least one centering element for radially centering the cutting part (3) in relation to the shank part (2),
f) the cutting part (3) being clamped or being capable of being clamped to the shank part (2) via a clamping element which acts at least predominantly in the axial direction,
g) the drill having a drill diameter (B),
h) the clamping element
h1) having, in the cutting part (3), holes or screw holes (341, 342) for fastening screws (40, 41) and preferably having fastening screws (40, 41),
h2) the shank part (2) having threaded holes (241, 242) for the fastening screws (40, 41), preferably as a continuation of the holes in the cutting part (3).

2. Modular drill according to Claim 1,
a) the dividing face (24) of the shank part (2) and the dividing face (34) of the cutting part (3) adjoining one another or being capable of adjoining one another flatly, in particular in contact with one another.

3. Modular drill according to one of the preceding claims,
a) the or each drill body (32, 33) forming a cutting edge (321, 331) at its end-side edge which is arranged in the rotational direction, and/or
b) a cutting edge corner (324, 334) being formed at the or at each outer end of the or each cutting edge,
c) preferably an end-side cutting edge corner (324, 334) at the end side of the cutting part (3) and/or a shank-side cutting edge corner (325, 335) at the dividing face of the cutting part (3).

4. Modular drill according to Claim 1,
a) the torque transmission element (20, 21) having at least one centering face (201, 211) for radially centering the cutting part (3) in relation to the shank part (2),
b) the at least one torque receiving region (30, 31) having a mating centering face (301, 311) which corresponds with the centering face (201, 211),
c) the at least one centering face (201, 211) forming, together with the mating centering face (301, 311), the or a centering element.

5. Modular drill according to one of the preceding claims,
a) the pin (340) and the central hole (240) forming the or a centering element, and/or
b) the pin (340) engaging or being capable of engaging into the central hole (240) and/or forming a centering element for radially centering and/or stabilizing the cutting part (3) in relation to the shank part (2), and/or
c) the fastening screws (40, 41) having a diameter (S) of between 10% and 30%, preferably of approximately 15%, of the drill diameter (B).

6. Modular drill according to one of the preceding claims,
a) the cutting part (3) having a drill diameter (B),
b) the cutting part (3) having two drill bodies (32, 33),
c) at least one first plane (K, L)
c1) being remote from the rotational axis (D) preferably by from 40% to 70%, particularly preferably by approximately 60%, of half the drill diameter (B),
c2) being parallel to the rotational axis (D), and
c3) being rotated by from 50° to 85°, preferably by approximately 68°, with respect to a second plane (N) through the shank-side cutting edge corners (325, 335) of the two drill bodies (32, 33), in which second plane (N) the rotational axis (D) preferably extends,
d) the center axis for a or each screw hole (341, 342) for the fastening screws (40, 41) extending in each case on the first plane (K, L), in particular at an angle in relation to a line which is at least approximately parallel to the rotational axis (D), preferably at an angle from approximately 30% to 80%, particularly preferably from approximately 40% to 60%, of the helix angle (α1).

7. Modular drill according to one of the preceding claims,
a) the cutting part (3) having a drill diameter (B),
b) the cutting part (3) having two drill bodies (32, 33),
c) the center axis for a or each screw hole (341, 342) for the fastening screws (40, 41) extending in each case on a first plane (K, L) and on a third plane (P, Q),
c1) the first plane (K, L)
c11) extending at an angle of from 50° to 85°, preferably of approximately 68°, with respect to a second plane (N) through the shank-side cutting edge corners (325, 335) and at least substantially through the rotational axis (D), and
c12) extending at least substantially parallel to the rotational axis (D), the spacing of the first plane (K, L) from the rotational axis (D) preferably being from 40% to 70%, particularly preferably approximately 60%, of half the drill diameter (B), and
c2) the third plane (P, Q) being at an angle of approximately 90° with respect to the first plane (K, L) and/or being inclined by from approximately 40% to 60% of the helix angle.

8. Modular drill according to one of the preceding claims,
a) at least one or in each case one cooling channel hole (221, 231) extending within at least one or each drill body (22, 23),
b) the at least one cooling channel hole (221, 231) preferably extending so as to correspond with the course of the drill body (22, 23) in relation to the rotational axis (D), in particular parallel to or helically around the rotational axis (D), and/or
c) the at least one cooling channel hole (221, 231) exiting in at least one flute (27, 28) of the shank part (2).

9. Modular drill according to one of the preceding claims,
a) the torque transmission face (200, 210) and/or the torque receiving face (300, 310) being of straight, convex or concave configuration, and/or
b) the torque transmission face (200, 210) and/or the torque receiving face (300, 310) extending at a positive or negative angle (·3) of between 5° and 35°, preferably between 15° and 30°, particularly preferably of at least approximately 20°, with respect to the rotational axis (D).

10. Modular drill according to one of the preceding claims,
a) the drill having a drill diameter (B),
b) the torque receiving face (300, 310) extending at an angle with respect to the dividing face (24), and/or
c) a first transition region (308) extending between a first torque receiving face (300) and the dividing face (34) and a second transition region (318) extending between a second torque receiving face (310) and the dividing face (34),
d) the longitudinal edges of the first transition region (308) extending at least approximately parallel to the longitudinal edges of the second transition region (318), and/or
e) the longitudinal edges of the first transition region (308) being at a spacing (A) of from approximately 40 to 60%, preferably of approximately 50%, of half the drill diameter (B) from the longitudinal edges of the second transition region (318), measured perpendicularly with respect to the course direction of the longitudinal edges.

11. Modular drill according to one of the preceding claims,
the centering face (201, 211) and/or the mating centering face (301, 311) being of flat or curved configuration, in particular being configured as part of a cylinder shell face with the rotational axis (D) as center axis.

12. Modular drill according to one of the preceding claims,
a) the torque receiving face (300, 310) adjoining the mating centering face (301, 311) at an angle, the angle being approximately 90°, and/or
b) the torque transmission face (200, 210) adjoining the centering face (201, 211) at an angle, the angle being approximately 90°.

## Revendications

1. Foret modulaire (1) comprenant
a) une partie de tige (2) ayant un côté avant (29),
a1) dans lequel la partie de tige (2) peut tourner autour d'un axe de rotation (D) dans une direction de rotation,
a2) dans lequel la partie de tige (2) comporte exactement ou au moins deux corps de perçage (22, 23) s'étendant parallèlement à l'axe de rotation (D) ou en forme de spirale avec un angle d'hélice (α1) autour de l'axe de rotation (D), qui sont séparés l'un de l'autre par des rainures de serrage (27, 28),
a3) dans lequel la partie de tige (2) comporte sur son côté avant (29) une surface de séparation (24) s'étendant au moins essentiellement perpendiculairement à l'axe de rotation (D),
b) une partie de coupe (3),
b1) qui peut tourner autour d'un ou de l'axe de rotation (D), et qui est reliée ou peut être reliée à la partie de tige (2) au niveau de son côté avant (29),
b2) dans lequel la partie de coupe (3) comporte au moins deux corps de perçage (32, 33) s'étendant en forme de spirale avec un angle d'hélice (α1) de préférence d'environ 30° autour de l'axe de rotation (D), qui sont séparés l'un de l'autre par des rainures de serrage (37, 38),
b3) dans lequel la partie de coupe (3) comporte sur son côté de pied (39) opposé au côté une surface de séparation (34) s'étendant au moins essentiellement perpendiculairement à l'axe de rotation (D),
c) dans lequel la partie de tige (2) comporte au moins un élément de transfert de couple (20, 21) faisant saillie du côté avant, dans lequel le au moins un élément de transfert de couple (20, 21) comporte au moins une surface de transfert de couple (200, 210) pour transférer un couple (M) dans la direction de rotation depuis la partie de tige (2) jusqu'à la partie de coupe (3),
c1) dans lequel le ou chaque élément de transfert de couple (20, 21) est formé au niveau de l'extrémité côté avant du ou de chaque corps de perçage (22, 23), ou forme l'extrémité côté avant,
c2) dans lequel le ou chaque élément de transfert de couple (20, 21) présente une surface avant (202, 212) au niveau de son extrémité côté avant
c3) dans lequel sont voisins de la surface avant (202, 212) dans le sens inverse des aiguilles d'une montre,
c31) au moins une surface extérieure (203, 213), qui se fond à l'autre extrémité dans une surface extérieure (220, 230) des corps de perçage (22, 23),
c32) les surfaces de transfert de couple (200, 210), qui jouxtent la surface de séparation (24) à l'autre extrémité,
c33) la ou une surface de centrage (201, 211), qui jouxte la surface de séparation (29) à l'autre extrémité, ainsi que
c34) une contre-surface de transfert de couple (204), qui se fond de préférence à l'autre extrémité dans une rainure de serrage (27),
d) dans lequel la partie de coupe (3) comporte au moins une zone de réception de couple (30, 31) pour recevoir le couple (M), dans lequel la au moins une zone de réception de couple (30, 31) comporte au moins une surface de réception de couple (300, 310) correspondant à au moins une des surfaces de transfert de couple (200, 210)
d1) dans lequel le ou chaque corps de perçage (32, 33) comporte une surface avant de corps de perçage (322, 332) à son extrémité côté avant,
d2) qui jouxte une interface de corps de perçage (323, 333) dans la direction de rotation, qui forme une transition vers ou depuis une rainure de serrage (37, 38),
d3) dans lequel la ou chaque zone de réception de couple (30, 31) s'étend de la surface de séparation (34) jusqu'à l'interface de corps de perçage (323, 333) et jusqu'à la surface avant de corps de perçage (322, 332), et jouxte l'interface de corps de perçage (323, 333) et la surface avant de corps de perçage (322, 332),
d4) dans lequel la zone de réception de couple (30, 31) s'étend dans la direction de la surface avant de corps de perçage (322, 332) et jusqu'à la surface avant de corps de perçage (323, 332) parallèlement à l'axe de rotation (D), ou comporte une inclinaison à l'encontre de la direction de rotation,
e) dans lequel la partie de coupe (3) comporte au moins un élément de centrage pour centrer radialement la partie de coupe (3) par rapport à la partie de tige (2),
f) dans lequel la partie de coupe (3) peut être serrée avec la partie de tige (2) par l'intermédiaire d'au moins un élément de serrage agissant principalement dans une direction axiale,
g) dans lequel le foret présente au moins un diamètre de foret (B)
h) dans lequel l'élément de serrage
h1) comporte dans la partie de coupe (3) des alésages ou des alésages de boulon (341, 342) pour des boulons de fixation (40, 41), ainsi de préférence que des boulons de fixation (40, 41),
h2) dans lequel la partie de tige (2) comporte des trous filetés (241, 242) pour les boulons de fixation (40, 41), de préférence en tant que suite des alésages dans la partie de coupe (3).

2. Foret modulaire (1) selon la revendication 1,
a) dans lequel la surface de séparation (24) de la partie de tige (2) et la surface de séparation (34) de la partie de coupe (3) sont planes, en particulier peuvent se jouxter en contact l'une avec l'autre, ou se jouxter l'une l'autre.

3. Foret modulaire (1) selon l'une quelconque des revendications précédentes
a) dans lequel le ou chaque corps de perçage (32, 33) forme un bord de coupe (321, 331) au niveau de son bord côté avant agencé dans la direction de rotation, et/ou
b) dans lequel au niveau de la ou de chaque extrémité extérieur du ou de chaque bord de coupe est formé un coin de coupe (324, 334),
c) de préférence un coin de coupe côté avant (324, 334) au niveau du côté avant de la partie de coupe (3) et/ou un coin de coupe côté tige (325, 335) au niveau d'une surface de séparation de la partie de coupe (3).

4. Foret modulaire (1) selon la revendication 1,
a) dans lequel l'élément de transfert de couple (20, 21) comporte au moins une surface de centrage (201, 211) pour un centrage radial de la partie de coupe (3) par rapport à la partie de tige (2),
b) dans lequel la au moins une zone de réception de couple (30, 31) comporte une contre-surface de centrage (301, 311) correspondant à la surface de centrage (201, 211),
c) dans lequel la au moins une surface de centrage (201, 211), ensemble avec la contre-surface de centrage (301, 311), forme le ou un élément de centrage.

5. Foret modulaire (1) selon l'une quelconque des revendications précédentes,
a) dans lequel le boulon (340) et l'alésage central (240) forment le ou un élément de centrage, et/ou
b) dans lequel le boulon (340) vient en prise ou peut venir en prise avec l'alésage central (240) et/ou forme un élément de centrage pour un centrage radial et/ou une stabilisation de la partie de coupe (3) par rapport à la partie de tige (2), et/ou
c) dans lequel les boulons de fixation (40, 41) présente un diamètre (S) compris entre 10 % et 30 %, de préférence d'environ 15 % du diamètre de foret (B).

6. Foret modulaire selon l'une quelconque des revendications précédentes,
a) dans lequel la partie de coupe (3) présente un diamètre de foret (B),
b) dans lequel la partie de coupe (3) comporte deux corps de perçage (32, 33),
c) au moins un premier plan (K, L),
c1) est à distance de l'axe de rotation (D) de préférence de 40 % à 70 %, de manière plus préférée d'environ 60 %, de la moitié du diamètre de foret (B),
c2) est parallèle à l'axe de rotation (D) et
c3) est tourné sur 50° à 85°, de préférence sur environ 68°, par rapport à un deuxième plan (N) dans lequel s'étend de préférence l'axe de rotation (D) à travers les coins de coupe côté tige (325, 335) des deux corps de perçage (32, 33),
d) dans lequel l'axe central pour un ou chaque alésage de boulon (341, 342) pour les boulons de fixation (40, 41) s'étend respectivement sur le premier plan (K, L), en particulier sur un angle par rapport à une ligne au moins approximativement parallèle à l'axe de rotation (D), de préférence sur un angle allant d'environ 30 % à 80 %, de manière plus préférée d'environ 40 % à 60 %, de l'angle d'hélice (α1).

7. Foret modulaire selon l'une quelconque des revendications précédentes,
a) dans lequel la partie de coupe (3) présente un diamètre de foret (B),
b) dans lequel la partie de coupe (3) comporte deux corps de perçage (32, 33),
c) dans lequel l'axe central pour un ou chaque alésage de boulon (341, 342) pour les boulons de fixation (40, 41) s'étend respectivement sur le premier plan (K, L) ainsi que sur un troisième plan (P, Q), c1) dans lequel le premier plan (K, L)
c11) s'étend sur un angle de 50° à 85°, de préférence sur environ 68°, par rapport à un deuxième plan (N) à travers les coins de coupe côté tige (325, 335) ainsi qu'au moins approximativement à travers l'axe de rotation (D), et
c12) s'étend au moins sensiblement parallèlement à l'axe de rotation (D), dans lequel la distance entre le premier plan (K, L) et l'axe de rotation (D) représente de préférence 40 % à 70 %, de manière plus préférée environ 60 %, de la moitié du diamètre de foret (B), et c2) dans lequel le troisième plan (P, Q) est sur un angle d'environ 90° par rapport au premier plan (K, L) est et/ou est incliné d'environ 40 % à 60 % de l'angle d'hélice.

8. Foret modulaire (1) selon l'une quelconque des revendications précédentes,
a) dans lequel à l'intérieur d'au moins un ou de chacun des corps de perçage (22, 23) s'étend au moins un ou un alésage de canal de refroidissement respectif (221, 231),
b) dans lequel le au moins un alésage de canal de refroidissement (221, 231) s'étend de préférence correspondant au parcours du corps de perçage (22, 23) par rapport à l'axe de rotation (D), en particulier parallèlement à ou en forme de spirale autour de l'axe de rotation (D), et/ou
c) dans lequel le au moins un alésage de canal de refroidissement (221, 231) sort dans au moins une rainure de serrage (27, 28) de la partie de tige (2).

9. Foret modulaire (1) selon l'une quelconque des revendications précédentes,
a) dans lequel la surface de transfert de couple (200, 210) et/ou la surface de réception de couple (300, 310) sont formées droites, convexes ou concaves et/ou
b) dans lequel la surface de transfert de couple (200, 210) et/ou la surface de réception de couple (300, 310) s'étendent sur un angle positif ou négatif (α3) compris entre 5° et 35°, de préférence entre 15° et 30°, de manière particulièrement préférée d'au moins environ 20 par rapport à l'axe de rotation (D).

10. Foret modulaire (1) selon l'une quelconque des revendications précédentes,
a) dans lequel le foret présente un diamètre de foret (B),
b) dans lequel la surface de réception de couple (300, 310) s'étend en formant un angle par rapport à la surface de séparation (24), et/ou
c) dans lequel une première zone de transition (308) s'étend entre une première surface de réception de couple (300) et la surface de séparation (34), et une seconde zone de transition (318) s'étend entre une seconde surface de réception de couple (310) et la surface de séparation (34),
d) dans lequel les bords longitudinaux de la première zone de transition (308) s'étendent au moins approximativement parallèlement aux bords longitudinaux de la seconde zone de transition (318), et/ou
e) dans lequel les bords longitudinaux de la première zone de transition (308) présentent une distance (A) d'environ 40 à 60 %, de préférence d'environ 50 %, de la moitié du diamètre de foret (B), mesurée à partir des bords longitudinaux de la seconde zone de transition (318), perpendiculairement à la direction des bords longitudinaux.

11. Foret modulaire selon l'une quelconque des revendications précédentes, dans lequel la surface de centrage (201, 211) et/ou la contre-surface de centrage (301, 311) sont de conception plane ou courbe, en particulier en tant que partie d'une surface d'enveloppe cylindrique avec l'axe de rotation (D) en tant qu'axe central.

12. Foret modulaire selon l'une quelconque des revendications précédentes,
a) dans lequel la surface de réception de couple (300, 310) jouxte la contre-surface de centrage (301, 311) sur un angle, dans lequel l'angle est d'environ 90°, et/ou
b) dans lequel la surface de transfert de couple (200, 210) jouxte la surface de centrage (201, 211) sous un angle, dans lequel l'angle est d'environ 90°.
